(19) Europäisches Patentamt / European Patent Office / Office européen des brevets

(11) **EP 3 416 067 A1**

# (12) EUROPEAN PATENT APPLICATION

| | |
|---|---|
| (43) Date of publication:<br>**19.12.2018   Bulletin 2018/51** | (51) Int Cl.:<br>**G06F 17/30** (2006.01) |

(21) Application number: **18020245.9**

(22) Date of filing: **24.05.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR** | • **CHARLTON, Chris**<br>**Cambridge, CB2 2ET (GB)**<br>• **PORTER, Martin Frederick**<br>**Norwich NR2 3EF (GB)** |
| (30) Priority: **24.05.2006  GB 0610327** | (74) Representative: **Norris, Timothy Sweyn**<br>**Basck**<br>**16 Saxon Road**<br>**Cambridge CB5 8HS (GB)** |
| (62) Document number(s) of the earlier application(s) in accordance with Art. 76 EPC:<br>**07732950.6 / 2 087 445** | Remarks:<br>This application was filed on 04-06-2018 as a divisional application to the application mentioned under INID code 62. |
| (71) Applicant: **Grapeshot Ltd**<br>**Reading, Berkshire RG6 1RA (GB)** | |
| (72) Inventors:<br>• **SNYDER, John Harvey**<br>**Cambridge, CB2 2BW (GB)** | |

(54) **COMPUTER IMPLEMENTED SEARCHING**

(57)    A computer system includes a data processor executing a computer program which processes a dendogram, wherein the computer system comprises a client terminal and a server, wherein the data processor is located at the client terminal, and the server is arranged to execute a search engine to select documents for the client terminal. The computer system dynamically allocates documents into groups responsive to one or more user inputs, each document being associated with a term profile comprising a set of ranked terms appearing in the document. The data processor receives an indication from a user relating to a required size of a group. Moreover, the data processor compares the term profiles of the documents to locate documents with overlapping terms. Furthermore, the data processor includes a display that displays an indicator providing an indication, wherein said indicator is a crosshair located in a grid on the display. The indicator is moveable in response to operation of a user interface by a user to provide said indication, wherein the display displays a document caption for documents in a common group, said documents having a number of overlapping terms dependent on the required size of a group.

Fig 5B

Printed by Jouve, 75001 PARIS (FR)

EP 3 416 067 A1

**Description**

Computer implemented document searching systems operate based on a search engine executed by a processor and a user interface which allows a user to interact with the search engine and which displays results to the user. Search engines often provide on the computer display a search box in which users are invited to type in one or more words using the user interface. The search engine processes the words as search terms, inputted by the user using the user interface. Some systems use mapped semantic relationships, predefined thesauri or other backend systems to enlarge the search query to include additional terms alongside the user's input.

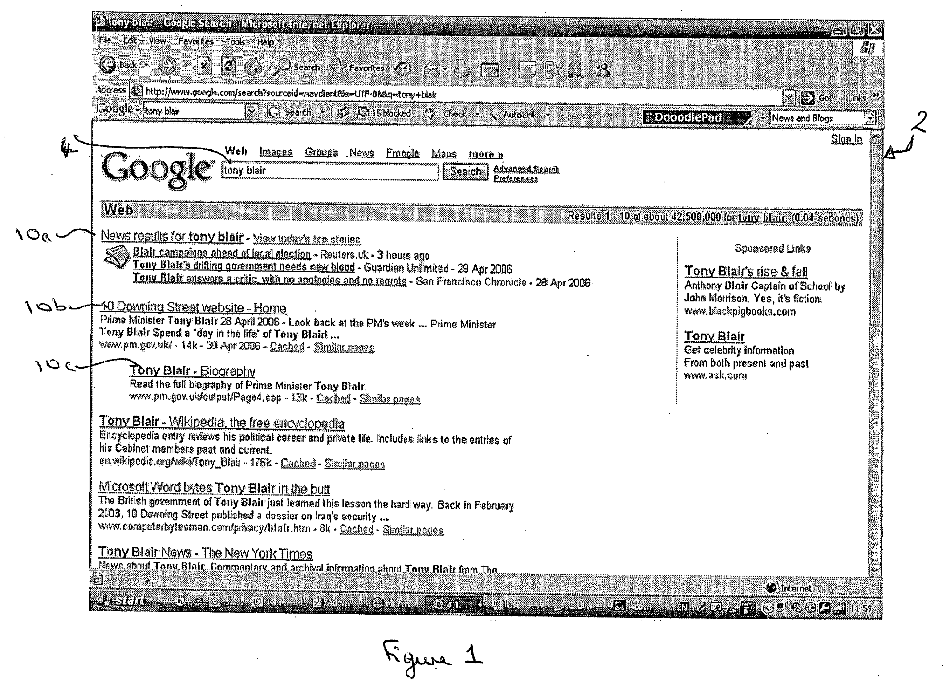

Figure 1 is a screen shot of a display **2** using a known search engine, supplied under the trademark Google™. Reference numeral **4** denotes the search box. The search result is often a display of successive brief descriptions **10a, 10b, 10c** of documents (captions), ranked by date, relevance according to the search engine's algorithms, or some other relativity criteria. At www.google.com, the results are displayed one at a time, in a linear listing.

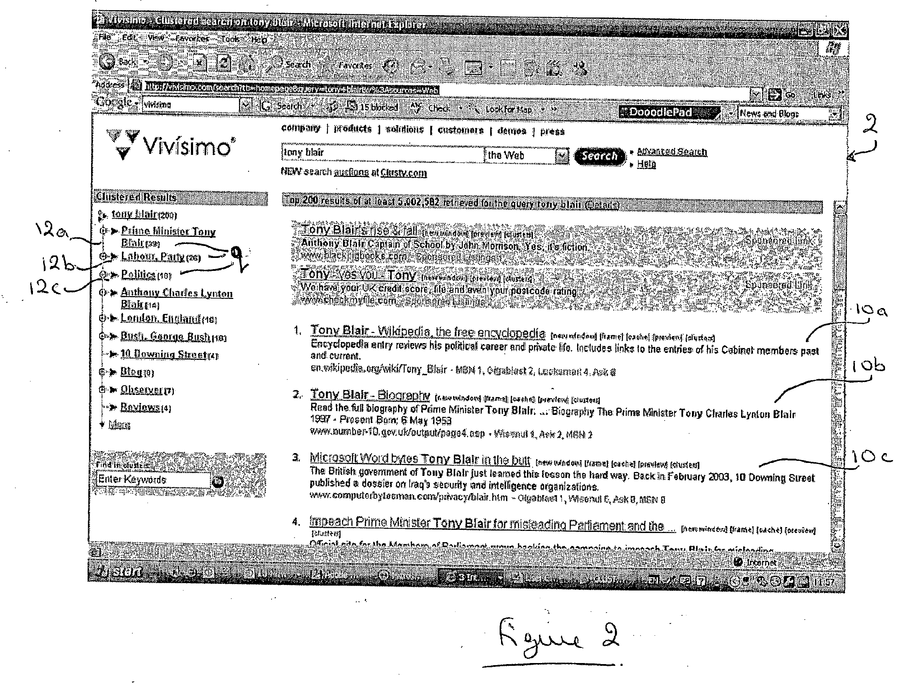

Some search engines use a classification metric to group results into bundles or clusters of documents that share the same attributes. This is a server-end process that organises the results in a predefined matrix of groups. For example, see Vivisimo® at hhtp://vivisimo.com. A screen shot is shown in Figure 2, which shows documents descriptions **10a, 10b, 10c** in a linear listing on the right and group headings **12a, 12b, 12c** etc on the left. Each group heading indicates the number, q of documents in that group. The attributes are shared words or terms. The groupings cannot be altered or manipulated by a user who requested the search.

Some search systems use algorithms which implement document ranking techniques to allow the relative importance of documents to be indicated to a user, based on words or search terms input by a user, but in a static manner and unaltered fundamentally by user input. That is, some search algorithms assign significance to a document by calculating the number of times a search word appears in a document - its within document frequency. Some algorithms also measure the length of the document to tune the relative importance given to a word in a document, as there is a danger that the word *"peanut"* is considered too relevant in a short document compared to the same word in a longer document - adjustments need to be made to normalise the collection. However most search engines will always give the same results to the same search query - as the words have a static pattern of distribution throughout each document, and thereby the whole corpus too.

According to an aspect of the invention, there is provided a computer implemented method of dynamically allocating documents into groups responsive to user input, each document being associated with a term profile comprising a set of ranked terms appearing in the document comprising: receiving at a computer interface an indication from a user relating to a required size of a group; executing a computer program to compare the term profiles of the documents to locate documents with overlapping terms; and to allocate documents in a common group with a number of overlapping terms dependent on the required size of a group.

Another aspect provides a computer system for dynamically allocating documents into groups responsive to user input, each document being associated with a term profile comprising a set of ranked terms appearing in the document, the system comprising: means for receiving an indication from a user relating to a required size of a group; means for comparing the term profiles of the documents to locate documents with overlapping terms; display means for displaying a document caption for documents in a common group, said documents having a number of overlapping terms dependent on the required size of a group.

According to an aspect of the present invention there is provided a method of operating a computer to organise documents comprising: viewing on a display of the computer a list of document captions, each caption representing a document and each document being associated with a term profile comprising a set of ranked terms; causing an indicator on the display to move by operating a user interface of the computer, to thereby cause the documents to be allocated into groups based on similarities between the documents, whereby additional movement of the indicator alters the allocation of documents into groups depending on their degree of similarity, wherein similarity is measured by the number of overlapping terms in the term profiles of the documents.

Another aspect of the invention provides a method of dynamically allocating documents into groups responsive to user input, each document being associated with a term profile comprising a set of ranked terms appearing in the document comprising: receiving an indication from a user relating to a required size of a group; comparing the term profiles of the documents to locate documents with overlapping terms; allocating documents in a common group with a number of overlapping terms dependent on the required size of a group.

A further aspect of the invention provides a method of adding a document to a database comprising: identifying in the document a plurality of terms (T); determining the frequency ($\phi$) of each term in the document; determining a normalised length of the document; generating a term weight for each term in the document using the frequency and normalised length; ranking the terms using the term weights to generate a term profile for the document; and adding the term profile in the database in association with a document identifier enabling the document to be accessed.

Most search engines offer either a search by date or a search by relevance. It is often presented as a choice alongside the familiar search box. Yet often what people want is not a reverse chronological listing of all news added into a database, as that would just reveal the sequence at which stories were incrementally added to the system. Instead they want relevant documents, as calculated by a sophisticated relevance algorithm, but biased towards most recent stores, if there are any relevant ones. The danger of just asking for relevant documents is that a search algorithm, using word within document frequencies could locate older documents that were seemingly more relevant than the recent ones. Another aspect of the invention provides a method of sorting documents by degree of relevance to at least one search term, comprising: determining a degree of relevance of a document by calculating a within document frequency for the at least one search term, said within document frequency being the number of times the term appears in the document relative to a length of the document; determining the age of a document based on its date; and for documents below a threshold age using as said length a modified document length based on an actual length of the document and its age, whereby more recent documents have a modified length shorter than their actual length.

For a better understanding of the present invention and to show how the same may be carried into effect, reference will now be made by way of example to the accompanying drawings in which:

Figure 1 is a screen shot of a display of an existing search engine;

Figure 2 is a screen shot of a display of another existing search engine;

Figure 3 is a schematic block diagram of a client server arrangement in a search system;

Figure 4 is a schematic diagram of a database structure;

Figure 5A is a screen shot of a display according to an embodiment of the invention;

Figure 5B is a screen shot of a display showing a document indicator in a different position;

Figure 6 is a diagram showing organisation of search results;

Figure 7 is a schematic diagram illustrating the production of a term profile;

Figure 8 is a schematic diagram illustrating operation of a search engine;

Figure 9 is a schematic diagram illustrating allocation of documents into groups; and

Figure 10 is a schematic flow chart showing salient steps in the indexing phase and search phase.

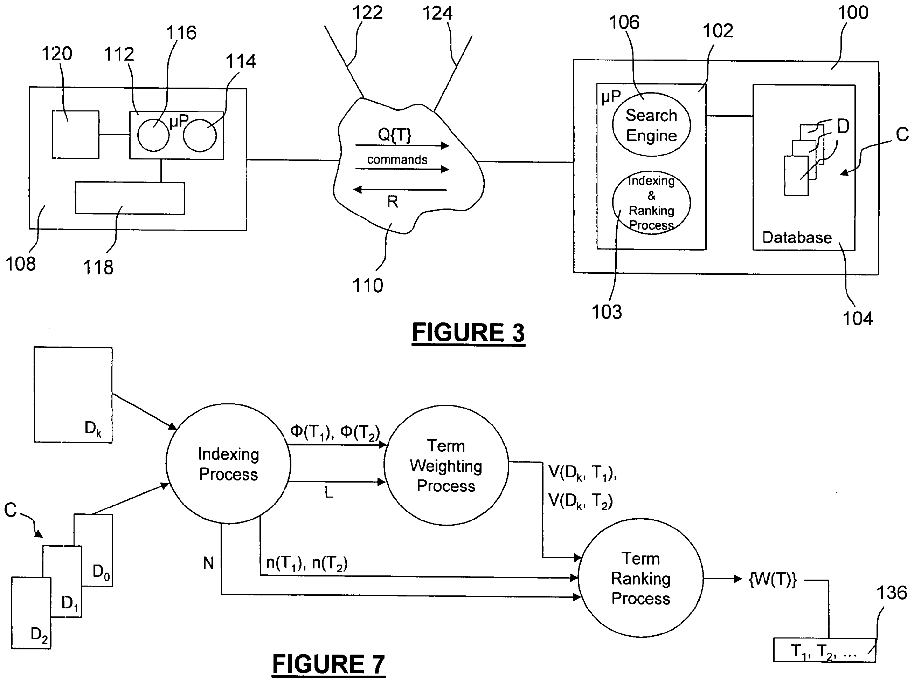

Figure 3 is a highly simplified schematic block diagram of a server/client architecture suitable for implementing embodiments of the present invention. Reference numeral **100** denotes a server including a processor **102** and a database **104.** It will be appreciated that the database can be provided locally to the server or remote therefrom but in communication therewith. The processor is shown executing a search engine **106** and an indexing and ranking process **103,** which are in the form of computer programs loaded into the processor. The processor is also responsible for managing communications of the server and other normal functions which will not be discussed further herein. The server **100** is in communication with a client terminal **108.** The client terminal can take any suitable form, but in particular can be a personal computer (PC). The server **100** is connected to the client terminal **108** via any suitable connection, but in particular this can be the internet or world wide web referenced by numeral **110.** The client terminal **108** has its own processor **112** which is shown executing a client browser **114** and a user interface program **116.** The user interface program **116** manages a user interface **118** of the client terminal. Reference numeral **120** denotes a local memory. The client browser **114** manages communications between the client terminal **108** and the server **100.** The client terminal **108** can dispatch to the server search queries Q, each query comprising one or more terms T. In addition, the client terminal **108** can dispatch commands to the server **100** to refine or otherwise control the search engine. The server **100** returns collections of documents R which result from the search activity carried out by the search engine in response to the query Q (T). The database **104** holds a collection C of documents D over which a search is conducted by the search engine. Documents are continually being added to the database **104,** and these documents can come from other sources accessible by the server, for example over the internet **110.** Possible sources of documents are indicated diagrammatically only by connections **122, 124.** Documents are added to the database in an indexing phase which extracts information from the document as described below to generate an indexing structure. In a search phase, the indexing structure is used to identify documents which can then be pulled from a number of difference sources over the web if the full document is needed.

The above referenced architecture is common to the implementation of many search engines. Herein, embodiments of the present invention provide a novel system in which documents can be displayed to a user at the client terminal in an interactive fashion by the user interface program. Additionally, improved searching techniques are described herein. The user interface **118** at the client terminal **108** comprises a display 2 (Figure 1). A user can control operation of the microprocessor using the display **2** using normal user activated means such as a keyboard or mouse and cursor. In the following discussion, it is assumed that a mouse and cursor is used to manage the user interface using the display.

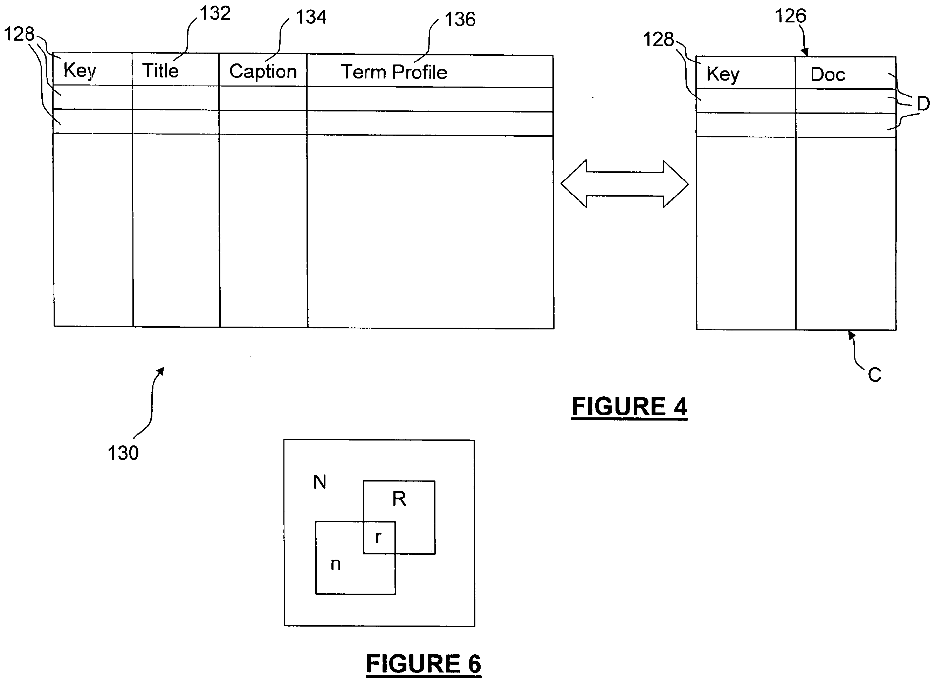

Figure 4 shows the layout of the database **104** in more detail. A store **126** holds the collection C of documents D accessible by keys **128**. These keys **128** are used in an indexing structure which holds additional information about the documents. For each document, the indexing structure **130** holds in association with the key **128** the title **132,** a caption **134,** and a *"term profile".* The term profile is an important element of the search system discussed herein and will be discussed in length later. Briefly, it comprises a set of terms located in that document which are ranked in order of their importance in the document, taking into account the context of the document.

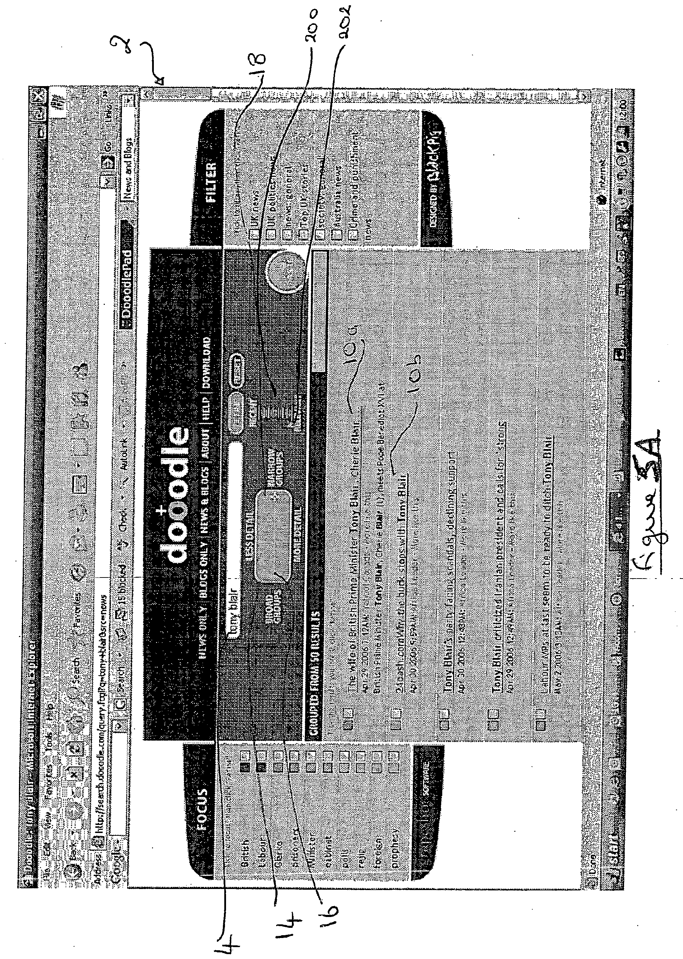

Figure 5A illustrates the display **2** of a search system implementing an embodiment of the invention. In addition to a search box **4,** target portion in the form of a two dimensional grid **14** is presented to allow the user to manipulate results in two dimensions. More dimensions could be added. The grid provides a horizontal crosshair **16** and a vertical crosshair **18,** which are referred to herein as a *"joystick".*

Moving the horizontal crosshair **16** up and down either reduces the amount of content displayed for each search result or increases it. Above the grid, the phrase *"Less Detail"* indicates that just the title is returned whereas *"More Detail"* increasingly reveals the first sentence or best two sentences. Note that, as discussed later, these sentences are computationally calculated in real time to assess the best sentences that match the query, not just the first, second and third sentences as the document was written.

Moving the vertical cross-hair **18** left and right has an organisational impact. At far right the results are displayed linearly as for the known search system of Figure 1. Each document description **10a, 10b** is a discrete item. However as the crosshair **18** is moved leftwards, some of the documents coagulate together to be part of the same cluster. The overlap of documents is not determined by a single, central backend categorisation engine as in the system shown in Figure 2. Instead the user is manipulating a gradient of real-time calculation as to which documents share the same top terms, words or tokens of significance.

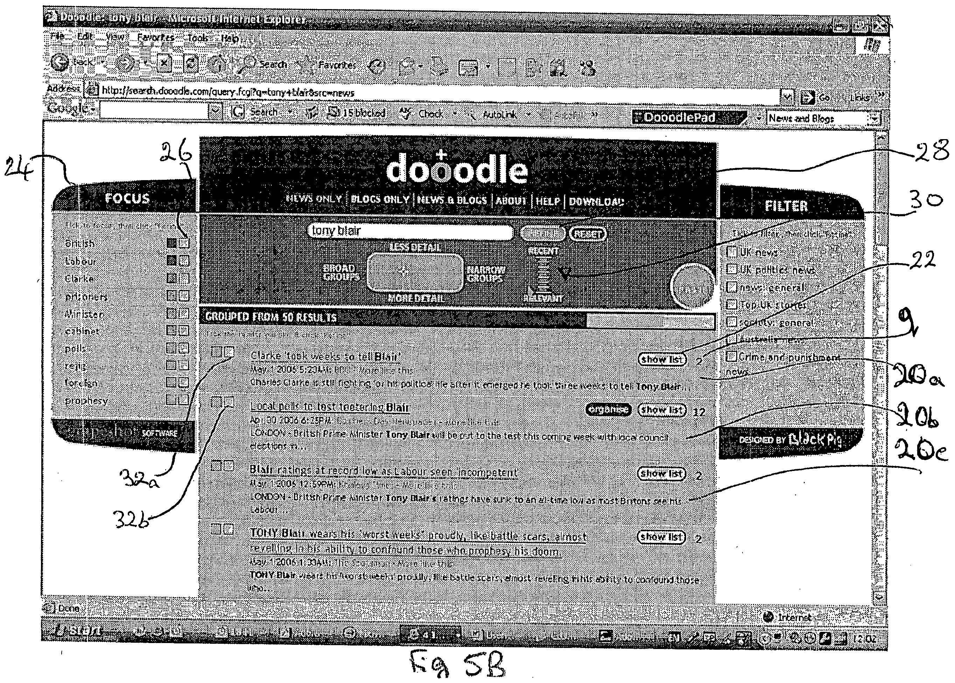

Figure 5B shows the clusters **20a, 20b, 20c** etc, each having a document description and a number no. indicating the number of documents in the cluster. A *"show list"* button **22** displays when activated by a user, the list of documents in that cluster. By each document description **20a, 20b,** etc, is a tick box **32a, 32b,** etc, by which a user can indicate his preference for that document. The function of the shaded boxes **34a, 34b,** will be discussed later. Figure 4 also illustrates other functions of the search system. At the left hand side, a focus list **24** lists a set of words *"British", "Labour", "Clarke",* etc, which are listed in order of ranking based on the importance of the word in the documents which have been located by the search. The manner in which words are ranked is discussed later. A user can select one or more of these words using the tick boxes **26.** If a user then activates a refine button **28,** the results will be shown, including the documents ranked as having the highest association with the word selected by the user. A sorting indicator **30** shown on the display can be set by a user to determine whether the documents which are returned should be sorted by date (recent) or by their word significance ranking (relevant).

Note above how documents group under what the polls say as well as two documents about Minister Clarke taking two weeks to update the British Prime Minister. The number q on the right hand side of search results indicate the number of documents in the cluster, as grouped from fifty results in this instance.

In contrast to the static grouping offered by existing systems (Figure 2), the present system applies and improves probabilistic information retrieval methods developed by academics that assign a weight to each word based on its distribution profile across the corpus - such that the word *"lawyer"* in a legal dataset is considered less significant than the work *"lawyer"* in a boating recreational magazine. The same term exhibits different variations from a *"normal"* distribution across each corpus.

The algorithms that allows weights to be given to each search term are given below.

An Information Retrieval (IR) system can be considered as a collection of documents, C, and of terms, which index the documents. A query, Q, is a request for information, and it divides the document collection into two sets. Set R is the collection of documents relevant to the query, and the complement set, M, the collection of documents not relevant to the query. So C is the union of R and M. The query itself is expressed as a collection of terms.

Consider a query, Q, one of whose terms is T. With T is associated a weight, W, given by a weighting formula,

$$W = \log \frac{(r + h)(N - n - R + r + h)}{(n - r + h)(R - r + h)}$$

Equation 1

where

> $h$ = 0.5, and
> $n$ = the number of documents indexed by T,
> $N$ = the total number of documents in the collection (the size of C),
> $R$ = the number of documents relevant to the query (the size of $R$),
> $r$ = the number of documents relevant to the query and indexed by $T$.

In Figure 6, one can think of $R$ and $n$ as the sizes of the two inner boxes, representing the set of relevant documents, and the set of documents indexed by $T$, and $r$ is the size of the small box where they intersect. The large surrounding box, representing the whole document collection, has size $N$.

Note that n is a function of $T$, the query term, $R$ is a function of $Q$, the query, and $r$ and Ware functions of $Q$ and $T$. This could be formalised by writing them as $n(T)$, $R(Q)$, $r(Q, T)$ and $W(Q, T)$. A difficulty with Equation 1 is that it becomes negative when the expression inside the logarithm is less than 1. Generally, negative weights are ascribed to very frequent terms, for example, when $n > N / 2$, and assuming $R$ and $r$ very small. Such terms derive from stopwords (the particle words of a language, such as *the, a, and, of, to* in English) or from other words so common that they convey little information in the IR system. A weight of zero, or a nominal low weight, is therefore more appropriate. The weighting formula is implemented herein therefore as,

$$W = \log \max\left[ \frac{(r + h)(N - n - R + r + h)}{(n - r + h)(R - r + h)}, 1 + \alpha \right] \qquad \text{Equation 2}$$

where $\alpha$ is set to a small positive number.

h keeps the values of $W$ within sensible bounds. The theoretical result has $h = 0$, but then the common cases when $r = 0$ would make $W$ shoot to minus infinity, and when $n = r$ would make it shoot to plus infinity. Setting $h$ to 0.5 gives useful practical results, but other settings are possible.

$n$ is called the term frequency, or frequency of $T$. An indexing process (discussed later) extracts a collection of terms for a particular document. The frequency of $T$ is then the total number of documents from which $T$ is extracted at least once as an index term.

$N$ is called the collection size. It is the total number of documents over which the IR system is operating.

$R$ is, theoretically, the total number of documents in the collection which are relevant to the query - the size of set $R$. Of course, if $R$ were known, there would be no need to run the query in the first place. But in the weighting formula it is the ratio,

$$\frac{r + h}{R - r + h}$$

which is critical, because in the other pair of factors

$$\frac{N - n - R + r + h}{n - r + h}$$

the influence of $r$ and $R$ is small, since, usually, r and R are small compared with $n$ and $N$. So $W$ can be reasonably estimated from a small sample of known relevant documents. This means that use of the document select boxes **32a, 32b** and *"refine"* button **28** can greatly improve the query process by this information feeding back into the computation of $W$.

Frequently, $R$ (and therefore $r$) will be zero.

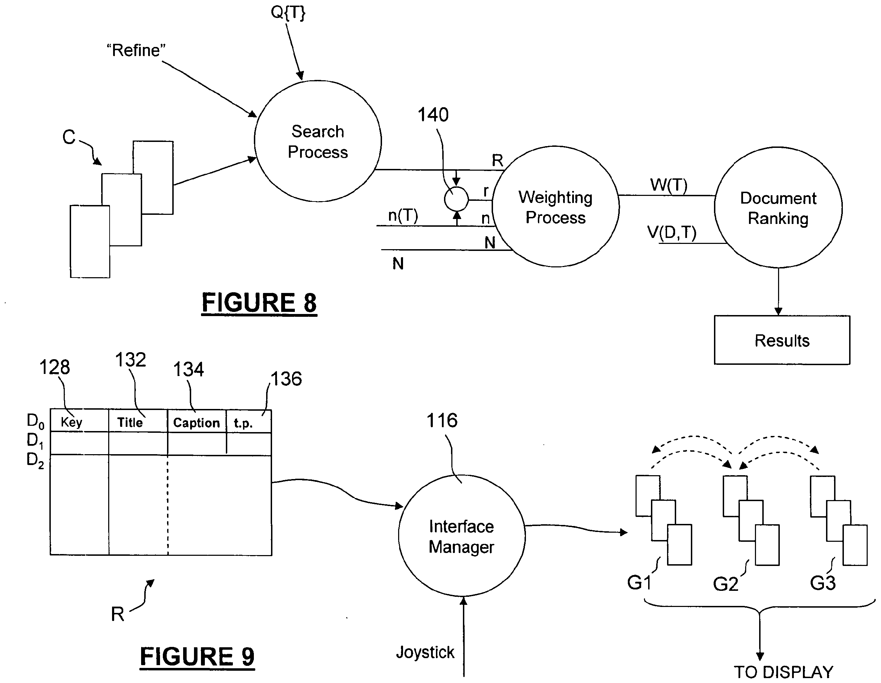

$r$ is found by counting (using a counter component **140** - Figure 8) how many of the $R$ relevant documents is indexed by $T$. In fact it is a slight underestimate, because the counting is done among the term profiles, which are sets of best terms for each document, rather than all terms for each document.

With query term *T,* and a particular document, *D,* is associated a weight *V,* given by

$$V = \frac{\phi}{K(1 - b + bL) + \phi}$$

Equation 3

where

$\phi$ = the number of instances of term *T* in document *D,*
*L* = the normalised document length of *D,* and *K* and *b* are constants, whose best values depend on the IR system as a whole. Again, *L*, $\phi$, *V* could be written *L(D)*, $\phi(T, D)$, *V(T, D)*.

$\phi$ is the within-document frequency of T in *D*. If *D* is a document, for example the play Hamlet, and *T* is a term, for example time, $\phi(T, D)$ is the number of times *T* occurs in *D,* for example 53. This covers variant textual occurrences time, Time, times, Times, from which the term time is derived. Document structures may be $\phi(T, D)$ starts at 0, and each time *T* is extracted from *D* as an index term it is incremented. Usually the increment will be 1, but larger values may be used to reflect term importance. For example, the increment could be 3 in minor headings and 8 in major headings.

*L* is the normalised document length, defined by

$$L = \frac{l}{l_{mean}}$$

where *l* is the true document length, and $l_{mean}$ the mean (average) document length for all documents in the collection. So *L* < 1 means the document is shorter than average, *L* > 1, longer than average. *L,* like $\phi$, is set in the indexing process. Various measures are possible: the document length in words; the document length in bytes; the number of index term extractions. The preferred measure is the highest term position recorded, where terms are given position numbers 1, 2, 3 ... as successive words of the document are indexed.

*K* is a non-negative number whose optimal value for retrieval performance depends on the particular IR system. *K* = 2 has been noted as a good value if you cannot do the experiments necessary to find its best value, and this is the value used by default in embodiments of the invention.

Essentially a high *K* value means $\phi$ is important, and a low *K* means $\phi$ is relatively unimportant. *K* = 0 makes *V* = *l* always, and *K* infinite makes *V* = *f.*

It is worth bearing in mind that queries run faster as *K* is decreased.

**b** is also IR system dependent, with *b* = 0.75 used as a default. In any case $0 \le b \le 1$. As *b* moves towards 0 the importance of *L* diminishes. (When *b* = 1, *V* tends to acquire too high a value for small *L.*)

For each document, *D,* and query *Q,* can be formed a score, *w(Q, D)*, by summing *V(D, T) W(T, Q)* over all terms *T* which are in *Q* and which index *D,* according to a ranking formula,

$$w(Q, D) = \sum_{\substack{T \in Q \\ T \to D}} V(T, D) W(Q, T)$$

Equation 4

A query, **Q**, gives rise to an *M*-set (matched set) which is a ranking of documents with their weights,

$$\begin{array}{cc} doc & weight \\ D_0 & w_0 \\ D_1 & w_1 \\ D_2 & w_2 \\ \cdots \\ D_k & w_k \end{array}$$

$w_i$ is the score for $D_i$ given by Equation 4, and $w_i \geq w_{i+1}$ for $0 \leq i < k$. *Msize,* the size of the *M*-set is $k + 1$.

So in summary each document contains terms and each document has its own weight based on those terms.

Rather than the static model of a search engine always giving the same results to the same search query (for example in Google®), the application of probabilistic information retrieval discussed above can provide a dynamic model - where the document weights can change. If the user selects a document and indicates he or she likes it using the tick boxes **32a, 32b** etc in Figure 4, then that document can become part of n, which in turn alters the weights given to terms and documents. Often this is represented in a change in the order of search results, because the significance of the terms inside the document marked or ticked by the user have been elevated.

In described embodiments of the invention the probabilistic information retrieval is taken one step further. Instead of documents being weighted, the terms in each document are weighted too - and used not to rank documents, but to rank terms and to give a user control to interactively control grouping of documents to allow improved searching capabilities.

The way in which terms are weighted in the source documents is given below. Note that terms can be single words delineated by a space, or indeed tokens made up of two words - e.g. a name appearing with two successive capital letters such as Tony Blair, can actually be indexed as *"Tony", "Blair", "Tony Blair"* as well as the stemmed variants (if applying stemming to the languages of the information used in the information retrieval system). When adding a document to a database, words in the document are "tokenised" (turned into tokens in a manner known *per se*) and the tokens are then used as terms.

Just as documents are ranked by formula in Equation 4, terms may be ranked by the formula,

$$wT(Q, T) = \sum_{\substack{D \in R \\ D \leftarrow T}} V(T, D)\, W(Q, T)$$

## Equation 5

The sum extends over each relevant document indexed by *T.* Note that *W* is constant inside the sum. *W* is derived from Equation 2, while *V* is derived from Equation 3, but possibly with different values for the constants K and b, than when the formula is used as above.

$$V = \frac{\phi}{K_E(1 - b_E + b_E L) + \phi}$$

## Equation 3A

So *K and b* control document ranking (forming the *M*-set), and $K_E$ and $b_E$ control term ranking (query expansion).

Note that if $K_E$ is zero, Equation 5 becomes simply,

$$wT(Q, T) = r(Q, T)\, W(Q, T)$$

where the score given to a term is *W* from Equation 2 multiplied by *r.*

If a document $D$ is thought of as the relevance set for some query $Q(D)$, then $R = 1$ for $Q(D)$, and for each term $T$ which indexes $D$, $r(Q(D), T) = 1$. Equation 5 then reduces to this simple form,

$$wT = V(T, D) \log \frac{N - n + h}{n + h}$$

## Equation 6

**where V is given by Equation 3A.**

Equation 6 is used to establish a term profile for each document in an IR system. The terms are ranked by this formula, and cut off after the first c, where c is set by the user. Documents are added to the database in an indexing phase using an add command. Document records are collected into files and indexed. The add command needs to be told the values of $K_E$ and $b_E$, as well as the profile cutoff, $c$.

$K_E$ and $b_E$ can usually be set the same as $K$ and $b$. A value of $c$ between 10 and 40 is recommended. The default in the add command is 20.

The term profiles are used as a fingerprint or summary of the document. In the embodiments described herein, the top twenty terms are used. Note that the term weights are dynamic. So at indexing time, a weight is attached, which can be seen by clicking on the red or coloured box **34a, 34b,** (Figure 5B) etc, left of a document caption in the search results. Although not shown in Figure 5B, when the coloured box **34a, 34b** is ticked a popup screen appears on the display **2** showing the term weights. At retrieval time the term weight is shown by hovering the cursor over a search result headline (which causes the popup screen to appear). There will frequently be a difference in the term weight based on the additional information (real time news) loaded into the search database since the document was indexed. If a user ticks one or more documents and refines the search, then hovers over a caption again, the term weights will again have changed by virtue of the user feedback into the term weight algorithm Equation 6.

In summary a term weight is present for each search term (word) in the corpus of a document. A term profile of the top twenty terms, at indexing time, is held in the system in an indexing structure which is easy and quickly accessible for search purposes. The same words will stay in the profile, as they reflect the relative significance of words in that document, relative to the whole corpus at the point of indexing. However the weights attached to any of those twenty terms can change - both by the changing uploads of new documents, as well as the users own interactions. Thus, the term weights can be considered to be live (dynamically changing) term weights, as opposed to static term weights (entered at indexing time and unchanged thereafter). These live term weights are used to return the best sentences in a document in response to movement of the *"More Detail", "Less Detail"* crosshair **16.**

When a search result happens, the search system returns to the client browser not only the documents that match the top 50 results, along with title and caption information, but also the term profile (top twenty terms) for each document.

These term profiles of fifty documents are used to calculate the degree of overlap or clustering using the crosshairs **16, 18.** Without going back to the server to repeat a calculation, since all the term profile information for all fifty documents has already been retrieved and loaded into local memory **120,** the client can hand over control to the user to assess how to organize the documents relative to each other. To speed up computational times, a dendogram of links is provided as part of each search output of a search. The dendogram can be calculated using any number of terms for each document term profile (usually uses twenty).

The dendogram shown in Annex A establishes from 250 profiles, 17749 dissimilarities between the documents as compared with one another. Note that the default for number of returned documents is 50, but it is possible to obtain more results by clicking a MORE RESULTS button (not shown in the Figures). The top twenty terms for each document, calculated by the term weight formula in Equation 5, at indexing time, is used as a basic measure of overlap or document similarity.

At the crude simple level, a plot is made of all documents which share the same top 20 terms. Invariably in the realm of real-time news on the internet, these are the same stories being repeated by different websites. In essence this is a good tool for de-duplication. For this purpose, the term weights applied at indexing time are used and remain static. However, it would be possible to use live term weights.

However the dendogram also shows the documents which share 18 same top terms. The six figure sum to the right is the document ID (key 128) inside the database, which links to a full caption record. This is a key to the other data that needs to be displayed by the interface.

The twenty terms in each of the documents in the 250 documents total 5000 terms generating 17,749 dissimilarities between the 250 term profiles as compared with each other. That means there are 05000 terms each with a weight that can be calculated and recalculated in real-time by the weighting formula above dependent on new content additions to the corpus as well as user interactions (marking documents he or she likes using the boxes **32a, 32b**). In that sense the documents which appear in each of the clusters can be ranked by virtue of which documents, each for example with say 15 identical term weights, have the highest relevance to the user's query based on the unions of top weighted terms for each of the documents. In this sense the subtle differences between two documents each with similar twenty words in the profile, can be assessed relative to each other, for the purpose of ultimate display back to the user in ranked order, or selecting the *"best document"* within a group of documents to display as the head document in that cluster/category.

Different searches will yield different documents from which the dendogram is calculated. At one extreme those documents which all have identical twenty terms term profile will be very similar, if not identical, whereas those documents with just two similar terms in their top twenty term profile may be very different by conceptual content. With a low similarity overlap there may be one story about Tony Blair talking about the Irish peace process, and another story about the same Tony Blair (same words) debating with Labour backbenchers. The dendogram plot of documents that may have all 20 terms similar, through to 18 similar, down to 15, 10 or 2 similar is mapped across to a joystick control 18 that has, say, ten "notch" positions.

The number of presented groups is not so important. What is important is the level of similarity within each group. The advantage of measuring simple term profile overlap between the documents is that this can be controlled very carefully.

The increasing weights in the dendogram levels will have big jumps and little jumps, as one adds up the number of documents that have 10, or 12 similar terms in their profile:

70 70 70 72 72 72 75 92 92 95 ....

A good place to break the dendogram up is at a point where there is a big jump, for example between 75 and 92. This calculation is carried out by mapping the dendogram similarity distribution to the pixellation available on the grid **14** to find appropriate *"notch"* positions, in proportion to the distribution.

Therefore a simple algorithm identifies the number of documents in each dendogram cluster (for example one group may have all documents with 15 or more similarities)) and then maps those differences across a ten unit scale - the horizontal plane of the joystick **18.** As the joystick is moved left or right a *"notch"* by the user manipulating the cross-hair on the interface (using a mouse or other user interface **118**), the display of results is changed, as different groups are displayed (with all documents sharing similar number of terms organized under one document that within that group exhibits the highest term weights and relevance (by term weight algorithm)).

The effect of the joystick **18** is that the user can in real time adjust the display of documents according to their apparent similarity or difference. It is useful to de-duplicate identical stories, yet locate other stories that may feature the same concepts (but differ by one or two top terms in the profile). The user can use the joystick to distinguish between duplicate content and different content (same concepts or thrust of story, yet different words). As the threshold of similarity gets more relaxed - in other words a group can contain 8 or more similar top terms in their profile, then more and more documents aggregate under the one cluster, and the results help the user to alight on the dissimilar, or outlier stories - those that are not part of the mainstream of the content, by concept, yet feature some of the same people, topics or concepts. In essence the joystick joins the use of dendograms (and an ability to group documents) with the novel way in which the search system treats each document by not just indexing all the words within, for a general search process, but also allocates a "top terms profile" based on term weight algorithms defined as a part of the broader probabilistic information retrieval approach. Term profiles as a fingerprint or summary of the documents content can be usefully applied to calculating similarity and dis-similarity within the search results and provide the platform for a dynamic, real-time capability for users to manipulate content at the client end of a search process, with no need for additional computational recalculation by the search algorithms of the information retrieval system.

Figure 7 is a schematic diagram illustrating how the above processes are implemented to produce a term profile for a document $D_k$. Assume that a new document $D_k$ is to be added to the collection $C$ of existing documents $D0, D1, D2,$ etc in the database **104.** An indexing process parses the new document $D_k$ and generates from it the normalised length $L,$ using one of the procedures discussed above, and values for the within-document frequency $\phi$ for each of a number of terms $T1, T2,$ etc. The values for $\phi$ and $L$ are supplied to a term weighting process which implements the formula of Equation 3A to generate term weights $V$ for each term within the document $D_k$. These term weights are supplied to a term ranking process which implements the formula of Equation 6. The term ranking process also uses parameters $n$ and $N$ which are derived from the indexing process. The term ranking process provides a set of term weights $w(T1), w(T2),$ etc which are used to establish the term profile **136** for the document $D_k$. Figure 8 is a schematic diagram illustrating operation of the search engine **106** as described above to generate a set of results of ranked documents, each document being associated with a term profile.

Figure 9 is a schematic diagram illustrating operation of the interface manager **116** on receipt of a set of results R from the search engine **106.** These results include documents identified by the elements of the indexing structure **130.** In particular, the results R include the term profiles **136** for each document. As described above, the interface manager **116** generates a dendogram which allows the documents to be grouped as illustrated diagrammatically *G1, G2,* and *G3* in Figure 9. Operation of the joystick by a user causes the interface manager to alter the groupings such that documents move between groups as indicated diagrammatically by the dotted arrows in Figure 9.

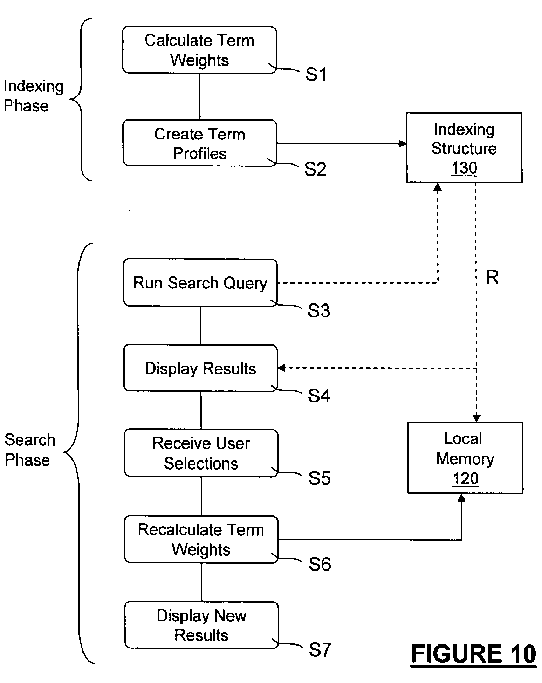

Figure 10 is a schematic flow chart showing salient steps in the indexing phase and search phase. In the indexing phase, step S1 denotes the calculation of term weights as described above. Step S2 denotes the step of creating term profiles using these term weights. The term profiles are stored in the indexing structure **130.** In the search phase, step S3 denotes running of a search query Q. Step S4 denotes displaying the results to a user as indicated in Figures 5A and 5B. Step S5 denotes the step of receiving user selections by the user indicating his preferences for certain documents (**32a, 32b**) or certain terms (**26**). Step S6 denotes the step of recalculating the term weights based on the user selections (live term weights). Step S7 denotes the step of displaying the new results to a user. At step S3, the search query is run using the indexing structure **130** and the results R are returned to be displayed at step S4 and also to be stored in the local memory **120.** When the user selections are received at step S5, these are returned to the processor **112** at the client which recalculates the term weights at step S6 and stores them back to the local memory **120.**

The algorithms described above show how various parameters are used to calculate relevance of a document - including within document frequency of a term as well as its frequency across the whole database collection. Document length is used as a variable to normalize the sense of relevance. It would not be correct to say a long document with many occurrences of the user's one search term was necessarily as relevant as a short document with fewer occurrences of the search word, as clearly the shorter document may have overall a higher density of the search terms and in a real sense be discussing the concepts or topics the user is actually seeking a more focused and detailed way. Therefore document length is used to control relevance to stop long documents always being considered unnecessarily too relevant.

Another aspect of the user interface shown in Figures 5A and 5B is a RECENT/RELEVANT scale **200** on which a sliding marker **202** can be moved by a user using the user interface **118** up or down.

This combines a scale of date and relevance into one single scale. To ease the user interface and aid the user to select what he or she is really after - the most recent relevant documents - document length is used to *"collapse"* the time and relevancy scales. With the marker **202** showing RECENT at one end of the scale, all documents in the results are matched based on the normal relevance algorithms - except that the documents which are most recent (as measured by their date of publication or addition to the database) are artificially considered to be of shorter length than they actually are. This has the effect of over-emphasising the within document frequency relationship with word density in a document, and thereby makes the document appear more relevant than it actually is. In this way the relevant documents that are most recent filter to the top of the results list. At the other end of the scale **200** on the user interface is RELEVANT. Here with search is conducted using the normal relevance algorithms, with no bias for the document length being invoked for when the document was actually published or added to the database. By providing a scale, the user can instantaneously notch up or down on the scale his or her request for documents of more recent publication dates (or documents more recently added to the database). There is therefore a gradient capability for selecting recent stories without the simple binary choice of Search-By-Date or Search-By-Relevance that search systems to date have offered. Thus, this embodiment provides a unique way of combining date and relevance onto one scale, by controlling the assumed length of a document.

## Annex A

```
250 profiles; 17749 dissimilarities

00--Path easier for Aussies to achieve sainthood  (173898)
 |
 `--- Realty Executives International Founder Honored Posthumously as Realtor of the Year  (214908)
 |
 `---15-- Djetou on loan at Saints  (243492)
 |
     `--- Djetou on Saints trial  (293713)
 |
 `---02--18-- Korea-born soldier made posthumous citizen  (67043)
 |      |
 |      `--- Korea-born soldier made posthumous citizen  (58639)
 |
     `--- Movie tells story of dutiful saint  (46850)
 |
     `--- Pope Warns Against Devaluing Family  (330468)
 |
     `--- Arrest of 'Hindu Pope' sparks little outrage as anti-caste feeling grows  (23838)
 |
     `---10-- Vatican Coffee Bar Adds Buzz To Basilica  (165544)
 |      |
 |      `---13--18-- Vatican coffee bar adds buzz to basilica  (162363)
 |      |      |
 |      |      `--- Vatican to challenge Starbucks?  (177032)
 |      |
 |      `--- The Pope's real Italian espresso bar  (227352)
 |
     `---03-- Castroneves meets Pope for support.  (327293)
 |      |
 |      `--- Pope Warns of a New Colonialism in AIDS Fight  (20011)
 |
     `---04-- Catholics share memories of Vatican II  (261002)
 |      |
 |      `---05--14--16-- Pope Defrocks Md. Priest Shot in 2002  (375702)
 |      |      |   |
 |      |      |   `--- Pope Defrocks Md. Priest Shot in 2002  (374573)
 |      |      |
 |      |      `---15--17-- Pope defrocks Md. priest shot in 2002  (360969)
 |      |      |      |
 |      |      |      `---18-- Pope Defrocks Md. Priest Shot in 2002  (360512)
 |      |      |      |
 |      |      |      `---19--20-- Pope Defrocks Md. Priest Shot in 2002  (378910)
 |      |      |      |      |
 |      |      |      |      `--- Pope Defrocks Md. Priest Shot in 2002  (375925)
 |      |      |      |      |
 |      |      |      |      `--- Pope defrocks Md. priest shot in 2002  (375557)
 |      |      |      |
 |      |      |      `--- AP NewsBreak: Pope defrocks Md. priest shot by his alleged victim
(359861)
 |      |      |
 |      |      `---20-- Pope defrocks Md. priest shot by his alleged victim  (379189)
 |      |      |      |
 |      |      |      `--- Pope defrocks Md. priest shot in 2002  (360602)
 |      |      |      |
 |      |      |      `--- Pope Defrocks Md. Priest Shot in 2002  (366303)
 |      |      |      |
 |      |      |      `--- Pope defrocks Md. priest shot in 2002  (364331)
 |      |      |
 |      |      `--- Pope Defrocks Md. Priest Shot in 2002  (377766)
 |      |      |
 |      |      `---20-- Pope John Paul defrocks Maryland priest shot by alleged victim
(376047)
 |      |      |      |
 |      |      |      `--- Pope defrocks Maryland priest shot by alleged victim  (373523)
 |      |      |
 |      |      `---20-- Pope Defrocks Md. Priest Shot in 2002  (369180)
 |      |      |      |
 |      |      |      `--- Pope Defrocks Md. Priest Shot in 2002  (364273)
 |      |      |      |
 |      |      |      `--- Pope Defrocks Md. Priest Shot in 2002  (364066)
 |      |      |      |
 |      |      |      `--- Pope Defrocks Md. Priest Shot in 2002  (363782)
```

```
                                          `--- Pope Defrocks Md. Priest Shot in 2002 (361976)
                                          |
                                          `--- Pope Defrocks Md. Priest Shot in 2002 (361849)
                                          |
                                          `--- Pope Defrocks Md. Priest Shot in 2002 (360052)
                                      `--- Pope Defrocks Md. Priest Shot in 2002 (364645)
                                      |
                                      `--- Pope Defrocks Md. Priest Shot in 2002 (366652)
                                      |
                                      `--- Pope defrocks wounded priest (372927)
                                      |
                                      `--- Pope Defrocks Md. Priest Shot in 2002 (374945)
                                      |
                                      `--- Pope Defrocks Md. Priest Shot in 2002 (364885)
                                  `--- Pope defrocks Md. priest shot in 2002 (360301)
                                  |
                                  `---16-- Pope defrocks priest who was shot by his alleged victim (376021)
                                      |
                                      `---18--19-- Pope defrocks priest who was shot by his alleged victim (370521)
                                      |        |
                                      |        `--- Pope defrocks priest who was shot by his alleged victim (374463)
                                      |        |
                                      |        `--- Pope defrocks priest who was shot by his alleged victim (370614)
                                      |
                                      |    `--- Pope defrocks priest who was shot by his alleged victim (371071)
                                      |
                                      `---18--20-- Pope defrocks priest who was shot by his alleged victim (377799)
                                      |        |
                                      |        `--- Pope defrocks priest who was shot by his alleged victim (377069)
                                      |        |
                                      |        `--- Pope defrocks priest who was shot by his alleged victim (377061)
                                      |        |
                                      |        `--- Pope defrocks priest who was shot by his alleged victim (375609)
                                      |        |
                                      |        `--- Pope defrocks priest who was shot by his alleged victim (374733)
                                      |        |
                                      |        `--- Pope defrocks priest who was shot by his alleged victim (374693)
                                      |        |
                                      |        `--- Pope defrocks priest who was shot by his alleged victim (373619)
                                      |        |
                                      |        `--- Pope defrocks priest who was shot by his alleged victim (373484)
                                      |        |
                                      |        `--- Pope defrocks priest who was shot by his alleged victim (372667)
                                      |        |
                                      |        `--- Pope defrocks priest who was shot by his alleged victim (371967)
                                      |        |
                                      |        `--- Pope defrocks priest who was shot by his alleged victim (366998)
                                      |        |
                                      |        `--- Pope defrocks priest who was shot by his alleged victim (366907)
                                      |        |
                                      |        `--- Pope defrocks priest who was shot by his alleged victim (366713)
                                      |        |
                                      |        `--- Pope defrocks priest who was shot by his alleged victim (366684)
                                      |    `---20-- Pope defrocks priest who was shot by his alleged victim (378940)
                                      |        |
                                      |        `--- Pope defrocks priest who was shot by his alleged victim (376764)
                                      |        |
                                      |        `--- Pope defrocks priest who was shot by his alleged victim (370374)
                                  `--- Pope defrocks Md. priest accused of sexual abuse (362412)
                                  |
                                  `---18-- Pope Defrocks Baltimore Priest (360790)
                                      |
                                      `--- Pope defrocks priest shot by his alleged victim (355910)
                              `--- Pope sacks another priest in sex abuse crackdown (40111)
                          `---16-- Crisis Highlights Ukraine's Religious Divide (250757)
                          |
                          `--- 'Revolution' shows Ukraine's religious divide (322417)
                      `--- World briefs - 21 December 2004 (215133)
                      |
                      `---05-- Keeping Christ in Christmas (169837)
```

```
`--- In Italy, it's been a rough year for the baby Jesus  (8851)

`--- DD to telecast Vatican Midnight Mass on X-Mas  (268693)

`--- All Pope Wants Is That Children Know Jesus  (191548)

`--- Christian Martyrs: Witnesses for the World  (276650)

`---06-- A Time to Live Meaning of Jesus' Birth, Says Pope  (372039)

    `--- God became human 'to share our fragile human condition,' pope says  (376278)

`--- Vatican accepts miracle by Kalaupapa nun  (242049)

`--- Miracles are out  (279973)

`---05-- John Paul II Urges Catholic-Jewish Friendships  (20071)

    `--- POPE TOUCHES ON ABORTION, HUMAN CLONING, STEM CELL RESEARCH IN SPEECH  (176091)

        `---07-- Christmas Tree Is Symbol of Christ, Says Pope  (114927)

            `---08-- Pope warns against materialism  (112637)

                `---09-- Pope Warns Against Christmas Materialism  (109472)

                    `---12-- JOHN PAUL REBUKES 'CRASS'MAS  (132900)

                        `---13-- Pope condemns Christmas materialism  (104410)

                            `--- Pope: At Christmas, give of yourself  (148487)

`--- POPE FAMILIES MUST ORGANIZE TO BECOME POLITICAL PROTAGONISTS  (60583)

`--- Pope sets anti-Nazi prelate on road to sainthood  (164254)

`--- Saint-making Pope is ready to ditch the miracle clause  (118559)

`---06-- Suffering pope tells collaborators he relies on them, God for help  (267891)

    `--- AIDS, POPE APPEAL TO CATHOLICS: LETS FIGHT IT TOGETHER  (4059)

    `--- Pope Greets Survivors of Beslan Attack  (114956)

    `---07--08--12--13-- Stop condom debate and help AIDS victims -cardinal  (70679)

            `--- Cardinal says cut through condom debate  (13988)

            `---15-- CATHOLIC CHURCH FIGHTS AIDS, STILL CONDEMNS CONDOMS  (9021)

                `---16--19-- the church's refusal to support condom use  (105312)

                    `--- Vatican Launches AIDS Charity  (105310)

                `---17-- The Vatican sets up AIDS foundation  (40070)

                    `---18-- Cardinals avoid debate on condoms  (164274)

                        `--- Vatican Starts AIDS Foundation  (5621)

                            `--- Vatican sets up AIDS foundation while cardinals avo

lebate on condoms  (28103)

                `--- Vatican Creates Foundation To Fund HIV/AIDS Charities  (227580)

            `--- Cardinal: Stop condom fight, help victims  (32946)

        `---16-- Ailing Pope Relies More on Aides  (276191)

            `--- Ailing Pope Says He Relies More on Aides  (275465)

    `---08-- "Lion of Muenster" Will Be a "Blessed"  (191641)

        `---09-- Way Cleared for de Foucauld's Beatification  (191607)
```

```
|   |   |   |   |   |   |   `---10-- Vatican decree clears way for beatification of Mother Marianne Cope
(232533)
|       |   |   |   |   |   |       `--- Pope approves Mother Mariannes miracle  (278739)
|   5   |   |   |   |   |   |       `---15-- Analyis: Blessed anti-Nazi cardinal  (208819)
|       |   |   |   |   |   |           `--- Anti-Nazi bishop on road to sainthood  (215546)
|  10   |   |   |   |   |   `---11--12--13-- Beatification Approved for Hawaii Nun  (156086)
|       |   |   |   |   |   |   |   `--- Moloka'i nun on road to sainthood  (190833)
|  15   |   |   |   |   |   |   |   `---14--15--18-- Beatification Approved for Hawaii Nun  (162612)
worked with lepers  (212684)                    `---19-- Vatican approves beatification of nun who
|  20   |   |   |   |   |   |   |   |   |   `--- Vatican approves beatification of nun who
work   with lepers  (244931)
|       |   |   |   |   |   |   |   |   `--- Nun a step closer to sainthood  (267992)
|  25   |   |   |   |   |   |   |   |   `--- Beatification Approved for Hawaii Nun  (164780)
|       |   |   |   |   |   |   |   `---18--20-- Beatification approved for Hawaii nun
(165971)
|  30   |   |   |   |   |   |   |       `--- Beatification Approved for Hawaii Nun
(16   3)
|       |   |   |   |   |   |   |       `--- Beatification Approved for Hawaii Nun
(163856)
|  35   |   |   |   |   |   |   |       `--- Beatification Approved for Hawaii Nun
(162192)
|       |   |   |   |   |   |   |       `--- Beatification Approved for Hawaii Nun
(162088)
|  40   |   |   |   |   |   |       `--- Beatification approved for nun who worked among
Hawaii leprosy  (182846)
|  45   |   |   |   |   |       `--- Beatification approved for Hawaii nun  (166435)
|       |   |   |   |   |   `---15-- Beatification Approved for Hawaii Nun  (158138)
|  50   |   |   |   |       `---18-- Beatification Approved for Hawaii Nun  (160826)
Hawaii leprosy patients  (167856)   `--- Beatification approved for nun who worked among
|       |   |   |   |       `--- Nun who worked with lepers could be saint
(269605)
|  55   |   |   |   |       `---19--20-- Beatification Approved for Hawaii Nun
(160238)
|       |   |   |   |           `--- Beatification approved for Hawaii nun
(156   9)
|       |   |   |           `--- Beatification approved for Hawaii nun
(156272)
|  65   |   |   |           `--- Beatification approved for Hawaii nun
(157422)
|       |   |           `---20-- Beatification approved for nun who work
among Hawaii leprosy patients  (154358)
|  70   |   |           `--- Beatification Approved for Hawaii Nun
(165237)
|       |   |           `--- Beatification Approved for Hawaii Nun
(158   6)
```

14

```
|    |  |   |   |   |   |   |   |   |   |   |       |    `--- Beatification Approved for Hawaii Nun
(156834)
|    |  |   |   |   |   |   |   |   |   |   |       |    |
(156589)                                                 `--- Beatification Approved for Hawaii Nun
|    |  |   |   |   |   |   |   |   |   |   |       |    |
(156029)                                                 `--- Beatification Approved for Hawaii Nun
|   10  |   |   |   |   |   |   |   |   |   |       |    |
(155614)                                                 `--- Beatification Approved for Hawaii Nun
|    |  |   |   |   |   |   |   |   |   |           |
(155697)                                              `--- Beatification Approved for Hawaii Nun
    15
                                              `--- Vatican Approves Molokai Nun For Beatification  (187124)
                                              `---13-- Colleague of Father Damian to Be Beatified  (191626)
    20                                            |
                                                  `--- Mother Marianne Cope deserves Catholic recognition  (241075)
                                              `--- Vatican to beatify German cardinal who opposed Nazis  (224254)
                                              `--- Kalaupapa nun a step closer to sainthood  (238872)
    25                                       `--- Syracuse's Mother Cope approved for beatification  (241371)
                                         `---10--16-- 22 who advanced to the stage of recognition  (235320)
                                             |   |
    30                                       |   `--- Pope Beatifies Prelate Who Opposed Nazis  (234257)
                                         `----14-- Pope sets anti-Nazi prelate on road to sainthood  (167055)
                                             `---19--20-- Pope sets anti-Nazi prelate on road to sainthood  (281536)
    35                                              |
                                                    `--- Pope sets anti-Nazi prelate on road to sainthood  (154997)
                                                 `--- Pope sets anti-Nazi prelate on road to sainthood  (151466)
    40                                           `--- Pope sets anti-Nazi prelate on road to sainthood  (150343)
                                     `--- Vatican approves Cope for beatification  (237019)
                                     `----20-- Pope approves beatification of French priest  (153737)
    45                                   `--- Pope approves beatification of French priest  (153438)
                                 `---12-- Pope ready to ditch miracle clause  (185348)
    50                               `----13-- Saint-making Pope is ready to ditch the miracle clause  (114787)
                                         `----17--20-- Pope Loosens Up Saints' Miracle Clause  (211050)
                                             |   |
                                             |   `--- Pope loosens up saints' miracle clause  (189410)
    55                                       |
                                             `--- Pope Loosens Up Saints' Miracle Clause  (193186)
                                         `--- Pope Loosens Up Saints' Miracle Clause  (183848)
    60                       `---07--12--14-- Ailing Pope seeks help  (275965)
                                 |   |
                                 `----19-- Ailing Pope seeks help  (300250)
                                     `---20-- Ailing Pope seeks help  (250666)
    65                                   |
                                         `--- Ailing Pope seeks help  (254880)
                                         `--- Ailing Pope seeks help  (241643)
    70                                   `--- Ailing Pope seeks help  (236110)
                                 `--- Pope admits frail health taking its toll with passing time  (289037)
    75                       `---18-- Pope needs more help  (240549)
                                 `---19-- Pope appeals for help to run church  (267411)
```

15

```
                                                    `--- Pope needs more help  (245197)

                                          `---08--09--14--17-- Pope: Age Brings More Need for God's Help  (246076)

      5                                              `--- Pope makes rare acknowledgment of his health  (262435)

                                                     `---18-- Pope John Paul II: Aging Is Hard  (269901)

   help 10 (286709)                                         `--- Pope John Paul II: Growing old brings a greater need of God's

   help    (294141)                                         `--- Pope John Paul II: Growing old brings a greater need of God's

      15                                             `---19-- Pope: Age Brings More Need for God's Help  (254593)

                                                       `---20-- Pope John Paul II: Aging Is Hard  (305945)

      20                                                  `--- Pope John Paul II: Aging Is Hard  (301169)

      25                                                  `--- Pope John Paul II: Aging Is Hard  (295254)

                                                         `--- Pope John Paul II: Aging Is Hard  (288692)

                                                    `--- Pope: Age brings more need for God's help  (265859)

   (260106)                                         `--- Pope: Age brings more need for God's help  (246630)

                                                    `--- Pope: Growing old brings a greater need of God's help

      35                                               `---20-- Pope: Age brings more need for God's help  (300822)

                                                         `--- Pope: Age brings more need for God's help  (282628)

                                                         `--- Pope: Age brings more need for God's help  (281772)

      40                                                  `--- Pope: Age Brings More Need for God's Help  (279494)

                                                         `--- Pope: Age Brings More Need for God's Help  (265922)

      45                                                  `--- Pope: Age Brings More Need for God's Help  (260485)

                                                         `--- Pope: Age Brings More Need for God's Help  (250510)

                                                         `--- Pope: Age Brings More Need for God's Help  (248577)

      50                                           `---19-- Pope: Age brings more need for God's help  (250038)

                                                     `--- In address, pope admits he struggles with aging  (300196)

      55                                        `---15-- Pope: Age Brings More Need for God's Help  (258647)

                                                   `--- Pope: Age Brings More Need for God's Help  (249116)

                                             `--- Old age brings greater need of God's help - Pope  (236687)

   (277843)                                `---13-- Pope makes reference to difficulties of aging in Christmas remarks

                                             `---16-- Pope makes references to his health  (301709)

   remarks  (270200)                             `---18-- Pope makes reference to difficulties of aging in Christmas

   remarks  (286826)                                `---19-- Pope makes reference to difficulties of aging in Christmas

   remarks  (307653)                                   `--- Pope makes reference to difficulties of aging in Christmas

   remarks  (283852)                             `--- Pope makes reference to difficulties of aging in Christmas

   remarks  (306462)                           `---17--20-- Pope makes reference to difficulties of aging in Christmas
```

```
remarks  (283216)                                         `--- Pope makes reference to difficulties of aging in Christmas

remarks  (279565)                                         `--- Pope makes reference to difficulties of aging in Christmas

remarks  (278753)                                         `--- Pope makes reference to difficulties of aging in Christmas

remarks  (268746)                                         `--- Pope makes reference to difficulties of aging in Christmas

remarks  (266933)                                         `--- Pope makes reference to difficulties of aging in Christmas

remarks  (266542)                                         `--- Pope makes reference to difficulties of aging in Christmas

remarks  (266222)                                         `--- Pope makes reference to difficulties of aging in Christmas

remarks  (263135)                                         `--- Pope makes reference to difficulties of aging in Christmas

                                                      `--- Pope Makes Reference To Difficulties of Aging  (266033)

                                   `---07--11--14-- Pope Condemns Same Sex Union as Attack on Society  (58860)

                                              `---15-- Pope Condemns Same Sex Union as Attack on Society  (57589)

                                                 `---16--17-- Pope says same sex union attack on society  (57037)

                                                      `--- Pope Condemns Same Sex Union as Attack on Society  (59464)

                                                      `---18-- Pope John Paul condemns gay marriages  (63695)

                                                         `--- Pope condemns same sex union as attack on society
(60261)

                                                         `--- Pope Condemns Same Sex Union as Attack on Society
(56846)

                                                      `--- Pope continues attack on gay marriage  (310733)

                                              `---18-- Pope: Gay Marriage 'Destroys The Fabric Of Society'  (77130)

                                                 `--- Pope: Gay Marriage'Destroys The Fabric Of Society  (149714)

                                   `---13-- Pope says attacks on family values growing stronger, more radical  (81854)

                                              `---20-- Pope says attacks on family values growing stronger, more radical
(89213)

                                                 `--- Pope says attacks on family values growing stronger, more radical
(85505)

                                                 `--- Pope says attacks on family values growing stronger, more radical
(83815)

                                                 `--- Pope says attacks on family values growing stronger, more radical
(83671)

                                                 `--- Pope says attacks on family values growing stronger, more radical
(83098)

                                                 `--- Pope says attacks on family values growing stronger, more radical
(82644)

                                                 `--- Pope says attacks on family values growing stronger, more radical
(82719)

                                                 `--- Pope says attacks on family values growing stronger, more radical
(82401)

                                                 `--- Pope says attacks on family values growing stronger, more radical
(82054)
```

```
 |   |   |   |   |   |          `---14-- Pope says attacks on family values growing stronger, more radical
(84747)
 |   |   |   |   |   |         |  `--18-- Pope says attacks on family values growing stronger, more radical
(8127)
 |   |   |   |   |   |         |   |  `--- Pope says attacks on family values growing stronger, more radical
(81989)
   10    |   |   `--- POPE JOHN PAUL II GREETS A GROUP OF BESLAN SCHOOLCHILDREN  (104972)
         |   |   `---08-- In looking back, pope says he hopes future leads to Christian unity  (376288)
   15    |   |      `--- Unity of Church and All Is a Priority, Says Pope  (276588)
         |   `--- Pope goes online  (158629)
         `---20-- Pope to canonise three, beatify nine in 2005  (239415)
   20       `--- Pope to canonise 3, beatify 9  (306349)
         `--- Church to List 3 More Saints and 9 New Blessed  (191572)
         `--- Pope Hopes Artists Get "Message of Truth"  (20110)
   25
```

## Claims

**1.** A computer system including a data processor executing a computer program which processes a dendogram, wherein the computer system comprises a client terminal and a server, wherein the data processor is located at the client terminal, and the server is arranged to execute a search engine to select documents for the client terminal, wherein the computer system dynamically allocates documents into groups responsive to one or more user inputs, each document being associated with a term profile comprising a set of ranked terms appearing in the document, **characterized in that**:

the data processor receives an indication from a user relating to a required size of a group;
the data processor compares the term profiles of the documents to locate documents with overlapping terms;
the data processor includes a display that displays an indicator providing an indication, wherein said indicator is a crosshair located in a grid on the display,
wherein the indicator is moveable in response to operation of a user interface by a user to provide said indication,
wherein the display displays a document caption for documents in a common group, said documents having a number of overlapping terms dependent on the required size of a group.

**2.** A computer system according to claim 1, wherein the client terminal comprises local memory for holding term profiles of documents selected by the search engine.

**3.** A computer system according to claim 2, wherein the server comprises an indexing structure which holds term profiles in association with document identifiers.

**4.** A computer implemented method using a computer system of any one of claims 1 to 3, wherein the method dynamically allocates documents into groups responsive to user input, each document being associated with a term profile comprising a set of ranked terms appearing in the document, **characterized in that** the method comprises:

receiving at a computer interface an indication from a user relating to a required size of a group;
executing a computer program to compare the term profiles of the documents to locate documents with overlapping terms, and to allocate documents in a common group with a number of overlapping terms dependent on the required size of a group.

**5.** A computer implemented method according to claim 4, wherein terms in a term profile are ranked according to static weights calculated at indexing time of a document.

**6.** A computer implemented method according to claim 4, which comprises receiving at the computer interface a selection from a user of one or more documents, and executing a computer program to modify said static weights based on the selection to generate live term weights.

**7.** A computer implemented method according to claim 6, wherein the term profiles which are compared comprise a set of terms ranked by live weights.

**8.** A computer implemented method according to claim 5, wherein the term profiles which are compared comprise a set of terms ranked by static weights.

**9.** A computer implemented method according to claim 4, wherein term profiles are held in association with respective document identifiers in an indexing structure.

**10.** A computer implemented method according to claim 9, wherein a document caption for each document is held in the indexing structure in association with the document identifier.

**11.** A computer implemented method according to claim 4, which comprises the step of displaying on a computer display a document caption for documents in a common group.

**12.** A computer implemented method according to claim 4, wherein the step of receiving an indication from a user comprises monitoring the position of an indicator on a computer display.

**13.** A method according to claim 12, wherein the indicator position is selectable by a user operating a user interface.

**14.** A method according to claim 13, wherein the indicator comprises a crosshair located in a grid on the computer display.

**15.** A method according to any one of claims 4 to 14 when implemented at a client terminal, said documents having been selected by a search engine executed at a server connected to the client terminal.

Figure 1

Figure 2

EP 3 416 067 A1

**FIGURE 3**

**FIGURE 7**

# EP 3 416 067 A1

Figure 5A

23

Fig 5B

128  132  134  136

| Key | Title | Caption | Term Profile |
|-----|-------|---------|--------------|
|     |       |         |              |
|     |       |         |              |

130

126

128

| Key | Doc |
|-----|-----|
|     |     |
|     |     |

D

C

**FIGURE 4**

N

R

r

n

**FIGURE 6**

Q{T}

"Refine"

C

Search
Process

140

R

r

Weighting
Process

W(T)

Document
Ranking

n(T)    n

N

N

V(D,T)

Results

**FIGURE 8**

| | Key | Title | Caption | t.p. |
|---|---|---|---|---|
| $D_0$ | | | | |
| $D_1$ | | | | |
| $D_2$ | | | | |

128   132   134   136

R

116

Interface
Manager

G1    G2    G3

Joystick

TO DISPLAY

**FIGURE 9**

EP 3 416 067 A1

Indexing Phase {

Calculate Term Weights — S1

Create Term Profiles — S2

Indexing Structure 130

Search Phase {

Run Search Query — S3

Display Results — S4

Receive User Selections — S5

Recalculate Term Weights — S6

Display New Results — S7

R

Local Memory 120

**FIGURE 10**

Europäisches
Patentamt

European
Patent Office

Office européen
des brevets

## EUROPEAN SEARCH REPORT

**Application Number**

EP 18 02 0245

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KREUSELER M ; SCHUMANN H: "Information visualization using a new focus+context technique in combination with dynamic clustering of information space", NEW PARADIGMS IN INFORMATION VISUALIZATION AND MANIPULATION, 2 November 1999 (1999-11-02), - 6 November 1999 (1999-11-06), pages 1-5, XP002445937, ISBN: 1-58113-254-9 * 2.Dynamic hierarchy computation; page 1, right-hand column - page 2, right-hand column * * figures 1-3 * | 1-15 | INV. G06F17/30 |
| X | US 2004/181554 A1 (HECKERMAN DAVID E [US] ET AL) 16 September 2004 (2004-09-16) * paragraph [0019] * * paragraphs [0054] - [0057] * * paragraphs [0061], [0064] * * figures 2A-2F * | 1-15 | |
| X | US 6 446 061 B1 (DOERRE JOCHEN [DE] ET AL) 3 September 2002 (2002-09-03) * column 13, lines 24-54 * * figure 1 * | 1-15 | **TECHNICAL FIELDS SEARCHED (IPC)** G06F |
| A | LARSEN B ; AONE C: "Fast and effective text mining using linear-time document clustering", PROCEEDINGS OF THE FIFTH ACM SIGKDD INTERNATIONAL CONFERENCE ON KNOWLEDGE DISCOVERY AND DATA MINING, 15 August 1999 (1999-08-15), - 18 August 1999 (1999-08-18), page 16-22, XP002445938, ISBN: 1-58113-143-7 * 2.1 Feature extraction; page 17, left-hand column * | 1,4,5,8 | |

The present search report has been drawn up for all claims

| Place of search | Date of completion of the search | Examiner |
|---|---|---|
| The Hague | 29 August 2018 | Denoual, Matthieu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 02 0245

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2018

| Patent document cited in search report | Publication date | Patent family member(s) | Publication date |
|---|---|---|---|
| US 2004181554 A1 | 16-09-2004 | US 2003018652 A1<br>US 2004181554 A1 | 23-01-2003<br>16-09-2004 |
| US 6446061 B1 | 03-09-2002 | NONE | |

EPO FORM P0459

For more details about this annex : see Official Journal of the European Patent Office, No. 12/82